# EUROPÄISCHE PATENTSCHRIFT

(11) **EP 4 127 555 B1**
(45) Veröffentlichungstag und Bekanntmachung des Hinweises auf die Patenterteilung: **10.01.2024**
(21) Anmeldenummer: 21710396.9
(22) Anmeldetag: 03.03.2021
(51) Int. Cl.: F17C 13/02

(54) **SYSTEM ZUR FUNKTIONSKONTROLLE EINES ÜBERDRUCKVENTILS EINES KRYOBEHÄLTERS AUF EINEM FAHRZEUGDACH**
SYSTEM FOR MONITORING THE FUNCTION OF A PRESSURE RELIEF VALVE OF A CRYOGENIC VESSEL ON A VEHICLE ROOF
SYSTÈME DE SURVEILLANCE DE LA FONCTION D'UNE SOUPAPE DE SURPRESSION D'UN RÉCIPIENT CRYOGÉNIQUE SUR UN TOIT DE VÉHICULE

(30) Priorität: 31.03.2020 AT 502702020
(43) Veröffentlichungstag der Anmeldung: 08.02.2023
(73) Patentinhaber: Cryoshelter GmbH, 8143 Dobl-Zwaring (AT)
(72) Erfinder: REBERNIK, Matthias, 8143 Dobl-Zwaring (AT)
(74) Vertreter: Schwarz & Partner Patentanwälte GmbH
(86) Internationale Anmeldenummer: PCT/AT2021/060071
(87) Internationale Veröffentlichungsnummer: WO 2021/195678

(56) Entgegenhaltungen:
- EP-A1- 3 489 062
- EP-A2- 0 781 958
- EP-B1- 0 781 958
- US-A- 6 047 747

## Beschreibung

Die Erfindung betrifft ein System zur Funktionskontrolle und Überdruckablassung eines Kryobehälters auf einem Fahrzeugdach, das System umfassend ein Fahrzeug und den am Fahrzeugdach montierten Kryobehälter, welcher ein Innenvolumen zur Aufnahme von Kryofluid aufweist.

Gemäß dem Stand der Technik können verflüssigte Gase in Behältern ("Kryobehältem") gespeichert werden, um diese als Kraftstoff für beispielsweise einen Motor zu lagern. Verflüssigte Gase sind Gase welche im flüssigen Aggregatszustand vorliegen und eine Temperatur aufweisen, welche gleich oder geringer ist als die druckabhängige Siedetemperatur des betreffenden Gases beim vorherrschenden Gasdruck. Wird eine solche kryogene Flüssigkeit beziehungsweise Kryofluid in einen Kryobehälter gefüllt, so stellt sich, abgesehen von thermischen Wechselspielen mit dem Kryobehälter selbst, ein Druck entsprechend der Siedetemperatur ein. Es ist insbesondere darauf zu achten, dass der Druck im Kryobehälter nicht zu groß wird, da der Kryobehälter sonst permanent beschädigt oder sogar explodieren könnte. Daher ist an jedem Kryobehälter zumindest ein Überdruckventil angeordnet, das Kryofluid bei Erreichen eines Schwellwerts aus dem Kryobehälter ablässt.

Aus der EP 3 489 062 A1 ist bekannt, einen Tank zur Aufnahme eines Kryofluids auf einem Fahrzeugdach zu montieren und ein Überdruckventil neben dem Kryobehälter am Fahrzeugdach vorzusehen. Das Überdruckventil löst aus, wenn der im Kryobehälter vorherrschende Druck einen Schwellwert überschreitet, und lässt in der Folge Kryofluid aus dem Kryobehälter aus, um den Druck zu verringern. Da das Überdruckventil am Fahrzeugdach für einen Benutzer im oder neben dem Fahrzeug in der Regel nicht ersichtlich ist, schlägt die genannte Schrift vor, einen Sensor vorzusehen, der die Überdruckauslösung des Überdruckventils überwacht. Wenn der Sensor eine Überdruckauslösung des Überdruckventils erkennt, steuert der Sensor eine Anzeigeeinrichtung an, die z.B. mittels eines Warnlichts anzeigt, dass das Überdruckventil ausgelöst wurde.

Das in der genannten Schrift beschriebene System weist jedoch insbesondere zwei Nachteile auf. Der erste Nachteil besteht darin, dass das in der genannten Schrift beschriebene System eine Stromquelle wie eine Batterie benötigt, sodass der Sensor die Auslösung des Überdruckventils detektieren und in der Folge ein Signal über elektrische Verbindungen an die Anzeigeeinrichtung senden kann. Da jedoch gerade während der Befüllung alle elektrischen Komponenten des Fahrzeugs abgeschaltet werden sollen, um einen Funkenschlag während der Befüllung des Kryobehälters zu vermeiden, ist die Batterie oder andere Stromquelle kontraproduktiv, da bei der Detektion eines Auslösens des Überdruckventils ein Signal gesendet werden soll und dadurch ein Stromfluss benötigt wird, der einen Funkenschlag herbeiführen könnte.

Der zweite Nachteil besteht darin, dass das Überdruckventil selbst mit einem Mangel versehen sein kann. Das Überdruckventil der genannten Schrift besteht aus einem eigentlichen Ventil und einer dahinter angeordneten "roten Kappe" als optische Anzeige, die bereits bei geringem Druck abspringt, d.h. somit jedenfalls, wenn das Ventil auslöst. Wenn das Ventil jedoch eine Leckage aufweist, kann sich die Kappe des Überdruckventils unbeabsichtigt von diesem lösen. Durch das Abspringen der Kappe des Überdruckventils wird somit durch die Anzeigevorrichtung eine Fehlermeldung abgegeben, ohne dass der Benutzer des Fahrzeugs weiß, ob das Überdruckventil tatsächlich beim vorgesehenen Druck ausgelöst hat.

Hintergrund für diese Problemstellung ist, dass üblicherweise zwei Überdruckventile für einen Kryobehälter vorgesehen werden, wobei das zweite Überdruckventil bei einem höheren Druck als das erste Überdruckventil auslöst. Das erste Überdruckventil löst bei einem Druck aus, der regelmäßig erreicht wird, wohingegen das zweite Überdruckventil als Backup für das erste Überdruckventil eingesetzt wird. Löst auch das zweite Überdruckventil nicht aus, kommt es bei einer weiteren Druckerhöhung zu einer Beschädigung des Kryobehälters. Deshalb kommt der roten Kappe des zweiten Überdruckventils eine hohe Bedeutung zu, denn wenn diese fehlt, kann dies auf eine Fehlfunktion des ersten Überdruckventils hindeuten.

Es ist daher die Aufgabe der Erfindung, eine alternative Ausführungsform zur Anzeige des Auslösens des Überdruckventils zu schaffen. Diese Alternative soll besonders robust ausgestaltet werden, sodass die Nachteile des Standes der Technik überwunden werden.

Diese Aufgabe wird durch ein System zur Funktionskontrolle und Überdruckablassung eines Kryobehälters auf einem Fahrzeugdach gelöst, das System umfassend ein Fahrzeug und den am Fahrzeugdach montierten Kryobehälter, welcher ein Innenvolumen zur Aufnahme von Kryofluid aufweist, wobei das System ferner eine Druckleitung umfasst, welche an einem Ende mit dem Innenvolumen des Kryobehälters verbunden ist und vom Kryobehälter am Fahrzeugdach zu einer an der Fahrzeugseite oder im Fahrzeuginnenraum zugänglichen Stelle geführt ist und dort an ihrem anderen Ende eine Druckanzeige aufweist, und wobei ein Ventil und eine Sollbruchstelle in der Druckleitung angeordnet sind und das Ventil zwischen der Sollbruchstelle und dem Innenvolumen des Kryobehälters angeordnet ist und bei einem vorbestimmten ersten Druck öffnet, der größer ist als ein zweiter Druck, bei dem die Sollbruchstelle bricht. Gemäß dieser Anordnung befindet sich die Sollbruchstelle somit zwischen dem Ventil und der Druckanzeige, sodass diese den Druck zwischen dem Ventil und der Sollbruchstelle messen und anzeigen kann.

Dieses System hat den Vorteil, dass es erstens komplett stromlos einen Betriebsstatus des Überdruckventils anzeigen kann. Die Information über das Überdruckventil kann mittels der bis zur Fahrzeugseite bzw. zum Fahrzeuginneren geführten Druckleitung angezeigt werden, ohne dass gesonderte elektrische Verbindungen von einem Sensor zu einer Anzeigevorrichtung zu legen wären.

Überdies ist mit dem erfindungsgemäßen System möglich, auf andere Fehlfunktionen des Ventils in der Druckleitung zu schließen, beispielsweise auf eine Leckage. Dies wird dadurch erzielt, dass der Druckanzeiger nur den Druck in der Druckleitung misst, nicht jedoch eine tatsächliche Auslösung des Überdruckventils oder ein Brechen der Sollbruchstelle. Die Druckanzeige ermöglicht somit, durch eine indirekte Anzeige eines Drucks einen Rückschluss über einen Zustand des Überdruckventils zu ziehen, ohne dieses selbst zu überwachen.

In einer bevorzugten Ausführungsform umfasst die Druckanzeige einen mechanischen Druckanzeiger. Diese Ausführungsform ist in der Praxis besonders einfach umzusetzen. Um Rückschlüsse vom angezeigten Druck auf das Ventil bzw. auf die Sollbruchstelle zu ziehen, können sich entweder Markierungen auf dem mechanischen Druckanzeiger befinden oder eine entsprechende Information neben dem mechanischen Druckanzeiger vorgesehen sein. Alternativ dazu kann ein Benutzer des Systems auch einfach aus dem Anzeigewert des mechanischen Druckanzeigers auf den Zustand des Ventils bzw. der Sollbruchstelle schließen, wenn der Benutzer entsprechend geschult ist.

In einer weiteren bevorzugten Ausführungsform weist die Druckanzeige eine erste Anzeigeeinheit auf, welche eine erste Warnung bei Erreichen eines dritten Drucks anzeigt, der geringer ist als der zweite Druck. Hierbei handelt es sich nicht um eine kontinuierliche Druckanzeige, sondern beispielsweise um einen Stift, der hervorspringt, sobald der dritte Druck erreicht wird. Dadurch kann unmissverständlich angezeigt werden, dass der dritte Druck erreicht wurde, ohne dass es einer Interpretation oder Analyse des Benutzers bedarf.

Das Ausgeben der Warnung bei dem dritten Druck, der geringer ist als der zweite Druck, deutet darauf hin, dass das Ventil undicht ist oder ausgelöst wurde, sodass eine Wartungsmaßnahme ergriffen werden sollte, wie z.B. ein Austausch des Ventils in einer Werkstätte.

In der vorgenannten Ausführungsform ist besonders bevorzugt, wenn die Druckanzeige eine zweite Anzeigeeinheit aufweist, welche eine zweite Warnung bei Erreichen des vierten Drucks anzeigt, der zwischen den zweiten und dem dritten Druck liegt. Insbesondere wenn der vierte Druck knapp unter dem ersten Druck liegt, bei dem sich das Ventil öffnet, kann durch die zweite Warnung darauf hingewiesen werden, dass das Ventil geöffnet sein könnte. Der vierte Druck wird zwischen dem zweiten und dem dritten Druck gewählt, da auch die Sollbruchstelle einer gewissen Fertigungstoleranz unterliegt und unter Umständen auch unter einem Druck auslösen könnte, der dem zweiten Druck entspricht.

Sowohl die erste als auch die zweite Anzeigeeinheit können bevorzugt nur manuell wieder in eine Stellung gebracht werden, in der sie die erste bzw. die zweite Warnung nicht ausgeben. Dies bewirkt, dass die Warnung solange ausgegeben wird, bis entsprechende Maßnahmen wie eine Wartung vorgenommen werden können.

Die vorgenannten Ausführungsformen werden bevorzugt derart ausgestaltet, dass die Druckleitung und die Druckanzeige derart ausgebildet sind, dass nach Öffnen des Ventils an der genannten Stelle kein Kryofluid austritt. Dadurch kann vorgesehen werden, dass Kryofluid nur über die Sollbruchstelle austritt. Diese Ausführungsform ist besonders sicherheitsrelevant, da sich an der genannten Stelle üblicherweise Personen befinden, welche die Druckanzeige überwachen, den Tank befüllen oder sonstige Arbeiten durchführen.

In einer alternativen Ausführungsform ist die Druckleitung mit einer Drossel ausgestattet und der Druckanzeiger umfasst eine Berstscheibe. Die Berstscheibe ist beispielsweise dazu ausgebildet, bei dem genannten dritten oder vierten Druck zu brechen, was einem Benutzer anzeigt, dass ein bestimmter Druck erreicht wurde. Zwar tritt nach dem Brechen der Berstscheibe Kryofluid aus der Druckleitung aus, jedoch kann der Austritt durch die Drossel so weit verringert werden, dass keine Gefahr für Personen nahe der Berstscheibe besteht.

Gemäß dem Stand der Technik werden Überdruckventile vertrieben, bei denen auf der Atmosphärenseite des Ventils eine Abdeckkappe vorhanden ist. Öffnet das Ventil, so springt auch die Abdeckkappe ab und lässt dort das Kryofluid aus. Fehlt die Abdeckkappe, so schließt der Benutzer auf ein Auslösen des Ventils. Erfindungsgemäß wird auch bei dem vorliegenden System eine Abdeckkappe für die Sollbruchstelle vorgesehen. Zwar könnte die Sollbruchstelle unter Umständen technisch einfacher ausgestaltet werden, jedoch sind Benutzer bereits an die Abdeckkappe gewöhnt und können auch bei der Erfindung weiterhin beim Fehlen der Abdeckkappe darauf schließen, dass das Ventil ausgelöst hat. Zudem ergibt sich der Vorteil der einfacheren Wartbarkeit des Systems, da Abdeckkappen für Überdruckventile bereits zur Verfügung stehen und daher keine neue Art der Sollbruchstelle geschaffen werden muss.

In einer weiteren bevorzugten Ausführungsform ist der Druckanzeiger neben einer Befüllkupplung zugänglich. Dies hat für den Benutzer den Vorteil, dass er während dem Befüllvorgang den Druckanzeiger stets im Blick behalten kann. Insbesondere sollte der Benutzer vor dem Start der Betankung wissen, ob der Tank in einem sicheren Zustand ist. Diese Information ist für den Benutzer auch vor jeder Inbetriebnahme relevant, was durch die erfindungsgemäße Anzeige einfach und schnell überprüfbar ist. Insbesondere ist die Information relevant, wenn das Fahrzeug mit dem Kryobehälter längere Zeit, z.B. einige Tage, nicht in Betrieb genommen wurde.

Der Ort der Anbringung der Sollbruchstelle am Fahrzeug kann unter Berücksichtigung der sicherheitsrelevanten Umstände prinzipiell frei gewählt werden. Besonders bevorzugt ist die Sollbruchstelle am Fahrzeugdach angeordnet, da in diesem Fall Kryofluid nur in Richtungen austritt, in denen sich keine Personen befinden. Alternativ dazu kann die Sollbruchstelle jedoch auch seitlich am Fahrzeug angeordnet sein und beim Brechen der Sollbruchstelle Kryofluid in Richtung des Fahrzeugdachs auslassen. Bei weiteren alternativen Ausführungsformen könnte die Sollbruchstelle auch an einem anderen Ort angebracht sein und beispielsweise ausgelassenes Kryofluid über eine Leitung an eine sichere Stelle wie das Fahrzeugdach führen, um das Kryofluid dort in die Umgebung abzugeben.

Vorteilhafte und nicht einschränkende Ausführungsformen der Erfindung werden nachfolgend anhand der Zeichnungen näher erläutert.
Figur 1 zeigt ein Fahrzeug mit einem am Fahrzeugdach montierten Kryobehälter.
Figur 2 zeigt ein Blockdiagramm des erfindungsgemäßen Systems.
Figur 3 zeigt die erfindungsgemäße Druckanzeige in einer ersten Ausführungsform.
Figur 4 zeigt die erfindungsgemäße Druckanzeige in einer zweiten Ausführungsform.
Figur 5 zeigt die erfindungsgemäße Druckanzeige in einer dritten Ausführungsform.

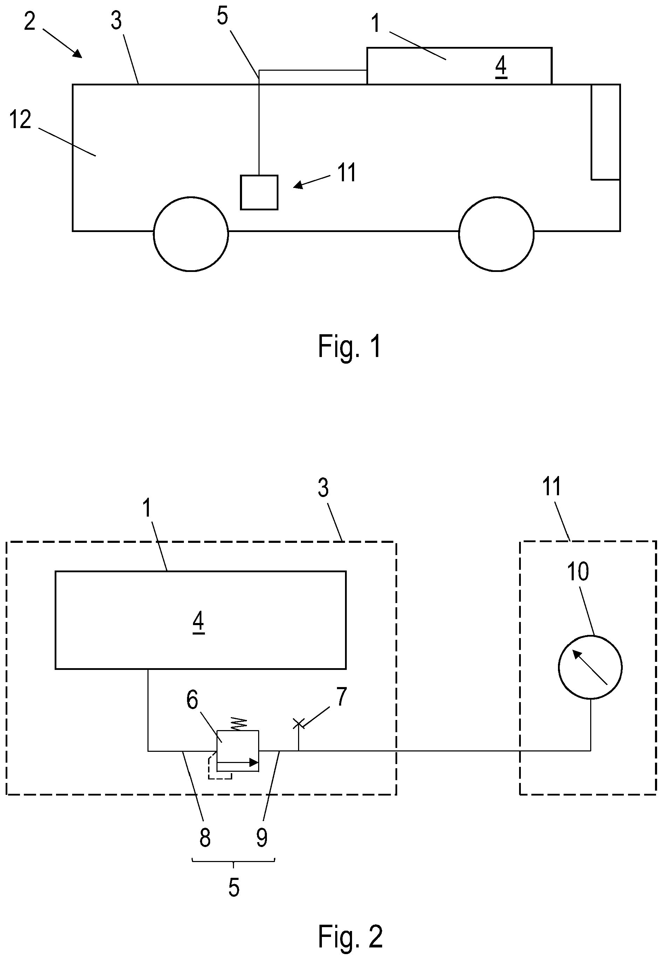

Figur 1 zeigt einen Kryobehälter 1 und ein Fahrzeug 2, wobei der Kryobehälter 1 auf dem Fahrzeugdach 3 montiert ist. Das im Innenbehälter 4 des Kryobehälters 1 gespeicherte Fluid ist beispielsweise verflüssigtes Erdgas, dem Fachmann auch als LNG ("Liquid Natural Gas") bekannt. Das Fluid liegt üblicherweise bis zu einem Füllstand in flüssiger Form vor, darüber im gasförmigen Zustand, sodass hier auch von Kryofluid gesprochen wird. Das Fluid dient in der Regel als Treibstoff für einen Motor des Kraftfahrzeugs 2, zu welchem Zweck der Kryobehälter 1 mittels einer Entnahmeleitung mit dem Motor des Fahrzeugs 2 verbunden sein kann.

Das Fahrzeug 2 kann beispielsweise als Niederflurfahrzeug ausgebildet sein. Im Allgemeinen ist darauf zu achten, dass das Fahrzeug 2 mit dem darauf montiertem Kryobehälter 1 eine bestimmte Höhe nicht überschreitet, sodass der am Fahrzeug befindliche Bauraum begrenzt ist. Eine Ventilbaugruppe, mittels welcher mit dem Kryobehälter 1 verbundene Leitungen geschlossen bzw. geöffnet werden können, wird in der Regel neben dem Kryobehälter 1 auf dem Fahrzeugdach 3 verbaut. Insbesondere zählen hierzu Überdruckventile, die mit dem Inneren des Kryobehälters 1 verbunden sind und Fluid in gasförmigen Zustand aus dem Kryobehälter 1 auslassen, sobald der Druck im Kryobehälter 1 einen vorbestimmten Schwellwert überschreitet.

Aus dem Stand der Technik ist bekannt, einen Sensor neben dem üblicherweise nicht leicht einsehbaren Überdruckventil anzuordnen, sodass der Sensor detektiert, wenn sich das Überdruckventil öffnet. Der Sensor kann daraufhin über elektrische Verbindungen eine Warnung an eine Anzeigeeinrichtung schicken, die sich an einer leichter zugänglichen Stelle befindet. Im Gegensatz dazu kommt die Erfindung ohne Sensor aus, der sich neben dem Überdruckventil bzw. neben einer Abdeckkappe des Überdruckventils befinden würde, wie im Folgenden anhand von Figur 2 beschrieben.

Erfindungsgemäß ist eine Druckleitung 5 an den Kryobehälter 1 angeschlossen, sodass Kryofluid vom Innenvolumen 4 des Kryobehälters 1 in die Druckleitung 5 gelangen kann. Die Druckleitung 5 ist derart am Kryobehälter 1 angebunden, dass Kryofluid in gasförmiger Phase in die Druckleitung 5 gelangt.

Zweck der Druckleitung 5 ist, dass Kryofluid aus dem Kryobehälter 1 abgelassen werden kann, wenn der Druck im Kryobehälter 1 einen Schwellwert überschreitet. In der Regel werden an Kryobehälter 1 zwei Überdruckventile angeschlossen, wobei das erste Überdruckventil einen Schwellwert aufweist, der geringer ist als der Schwellwert des zweiten Überdruckventils. Die hierin dargelegte Druckleitung 5 mit ihren Komponenten soll hauptsächlich das Überdruckventil mit dem höheren Schwellwert ersetzen, wobei jedoch vorgesehen werden kann, die Druckleitung 5 auch statt dem Überdruckventil mit dem geringeren Schwellwert einzusetzen.

Gemäß Figur 2 befinden sich ein Ventil 6 und eine Sollbruchstelle 7 in der Druckleitung 5. Sowohl das Ventil 6 als auch die Sollbruchstelle 7 werden in der Regel auf dem Fahrzeugdach 3 vorgesehen, können jedoch auch an einer anderen Stelle montiert werden. Das Ventil 6 hat die Eigenschaft, dass es öffnet, sobald der Druck auf der dem Kryobehälter 1 zugewandten, druckbeaufschlagten Seite 8 der Druckleitung 5 einen Schwellwert überschreitet, der einem ersten Druck von z.B. 16 bar oder 22 bar entspricht. Dadurch kann Kryofluid vom Innenbehälter 4 durch die druckbeaufschlagten Seite 8 und das Ventil 6 zur Atmosphärenseite 9 der Druckleitung 5 strömen und dort wie unten näher erläutert in die Umgebung abgelassen werden.

Die Druckleitung 5 ist somit vom Ventil 6 in zwei getrennte Bereiche unterteilt, die druckbeaufschlagte Seite 8 einerseits und die Atmosphärenseite 9 andererseits. In der druckbeaufschlagten Seite 8 herrscht ein Druck, der dem Druck im Innenbehälter 4 des Kryobehälters 1 entspricht. Sofern das Ventil 6 vollständig und dicht geschlossen ist, liegt in der Atmosphärenseite 9 ein Druck vor, der dem Atmosphärendruck entspricht, was im Folgenden mit 0 bar Überdruck bezeichnet wird. Überdies ist auch möglich, die Atmosphärenseite 9 mit einem "Resetknopf" zu entlüften und den Druck in der Atmosphärenseite 9 damit auf 0 bar Überdruck zurückzusetzen, um unvermeidliche Minimalleckagen, die sich über längere Zeit summieren können, nicht fehlzuinterpretieren.

Die Druckleitung 5 kann derart ausgestaltet sein, dass sie auf beiden Seiten des Ventils 6 einen gleichen Durchmesser aufweist. Jedoch kann insbesondere auch vorgesehen sein, dass die Druckleitung 5 auf der Atmosphärenseite 9, zumindest nach der Sollbruchstelle 7, einen geringeren Durchmesser aufweist.

Die Atmosphärenseite 9 der Druckleitung 5 mündet auf der dem Ventil 6 abgewandten Seite in einer Druckanzeige 10. Die Druckanzeige 10 befindet sich an einer Stelle 11, die an der Fahrzeugseite 12 oder im Fahrzeuginnenraum zugänglich ist. Beispielsweise kann die Druckanzeige 10 neben einer Befüllkupplung auf der Fahrzeugseite 12 zugänglich sein, sodass eine Person, die den Kryobehälter 1 betankt, die Druckanzeige 10 stets im Blick behalten kann. Jedoch könnte der Druckanzeiger auch an einem Armaturenbrett in der Fahrerkabine des Fahrzeugs 2 zugänglich sein, sodass der Fahrer den Druckanzeiger sofort im Blick hat, wenn er in das Fahrzeug 2 einsteigt. Die Druckleitung 5 könnte auch auf der Atmosphärenseite 9 in zwei Teilstränge abzweigen und an den Enden der beiden Teilstränge jeweils eine Druckanzeige aufweisen, sodass eine der Druckanzeigen 10 auf der Fahrzeugseite und eine der Druckanzeigen 10 im Fahrzeuginnenraum zugänglich ist. Die Druckanzeige 10 umfasst in der Regel auch die Einheit zum Messen des Drucks. Wenn nicht, ist diese zumindest an der Druckleitung 5 an der Stelle 11 montiert und mit der Druckanzeige 10 verbunden.

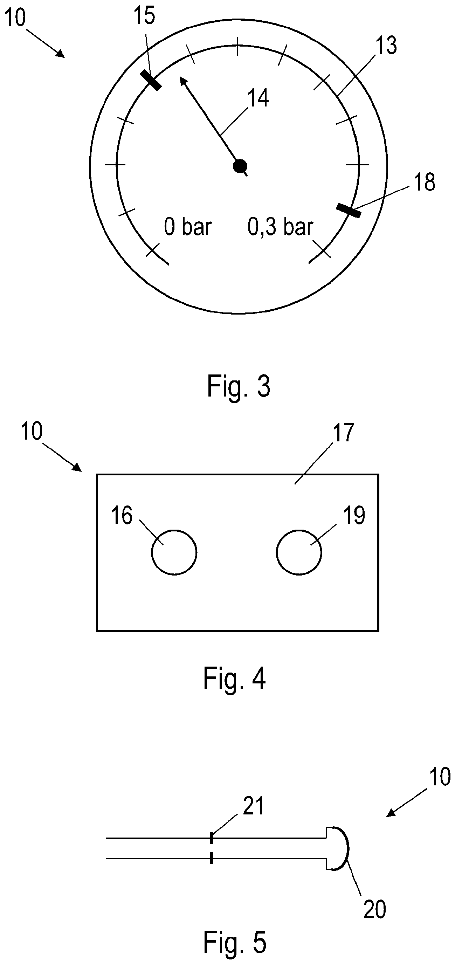

Die Druckanzeige 10 kann den in der Atmosphärenseite 9 vorherrschenden Druck beispielsweise auf einer kontinuierlichen Skala anzeigen und hierfür in einer Ausführungsform als mechanischer Druckanzeiger ausgebildet sein (Figur 3). Alternativ kann der Druckanzeiger 5 auch derart ausgebildet sein, dass er eine erste Warnung anzeigt, wenn ein bestimmter Druck erreicht wird, und optional eine zweite Warnung ausgeben, wenn ein bestimmter anderer Druck erreicht wird (Figur 4). Diese Ausführungsformen sind unten im Detail erläutert.

Um das Kryofluid aus der Atmosphärenseite 9 auszulassen, sobald das Ventil 6 bei Erreichen des ersten Drucks öffnet, weist die Druckleitung 5 die Sollbruchstelle 7 auf, die sich zwischen dem Ventil 6 und der Druckanzeige 10 befindet. Die Sollbruchstelle 7 kann beispielsweise durch eine Abdeckkappe gebildet werden, die eine Signalfarbe aufweisen kann. Üblicherweise werden Abdeckkappen rot ausgestaltet. Anstelle einer Abdeckkappe kann die Sollbruchstelle jedoch auch als einfache Klappe oder weiteres Überdruckventil in der Druckleitung 5 ausgebildet sein.

Die Sollbruchstelle 7 ist üblicherweise am Fahrzeugdach 3 angeordnet, könnte jedoch auch auf der Fahrzeugseite 12 angeordnet sein und derart ausgebildet sein, dass sie Kryofluid nur in eine Richtung ausgibt, die für neben dem Fahrzeug 2 stehende Personen ungefährlich ist, d.h. in Richtung des Fahrzeugdachs 3, also nach ober oder schräg nach oben.

Die Sollbruchstelle 7 bricht bei einem zweiten Druck, der in der Regel bei 0,3 bar liegt, im Allgemeinen jedoch auch zwischen 0,1 und 2 bar liegen kann. Es ist ersichtlich, dass die Sollbruchstelle 7 bei einem Druck bricht, der weit unter dem ersten Druck liegt. Die sicherheitsrelevante Komponente ist somit das Ventil 6 und nicht vorrangig die Sollbruchstelle 7. Gemäß dem Stand der Technik ist daher üblich, dass auf das Auslösen des Überdruckventils geschlossen werden kann, wenn eine Abdeckkappe nicht mehr am Überdruckventil vorhanden ist. Es hat sich jedoch herausgestellt, dass das Ventil 6 undicht sein kann. Dadurch erhöht sich der Druck so weit, bis die Abdeckkappe abspringt und somit ein sicherheitskritischer Zustand angezeigt wird, aber unklar ist, ob dies wegen einer nicht sicherheitskritischen Leckage oder ob dies wegen einem sicherheitskritischen tatsächlichen Erreichen des ersten Drucks geschah. Im zweiten Fall sind andere Handlungen erforderlich als im ersten, welche sich in den Folgekosten stark unterscheiden.

Erfindungsgemäß kann mittels des bereitgestellten Druckrohres 5 durch die Druckanzeige 10 auf der Atmosphärenseite 9 des Druckrohres 5 unabhängig vom Brechen der Sollbruchstelle 7 festgestellt werden, ob das Ventil 6 undicht ist. In einem Beispiel liegt im Regelfall in der Atmosphärenseite 9 des Druckrohres 5 ein Druck von 0 bar vor und die Sollbruchstelle 7 bricht bei dem zweiten Druck von 0,3 bar. Zeigt die Druckanzeige 10 jedoch statt einem Normaldruck von 0 bar an, dass im Druckrohr 5 ein Druck von 0,1 bar vorherrscht, kann auf eine Leckage des Ventils 6 geschlossen werden. In diesem Fall wird empfohlen, das Fahrzeug in eine Werkstätte zu verbringen, damit das Ventil 6 ausgetauscht oder repariert werden kann.

Dieser Druck von beispielsweise 0,1 bar, bei dem auf eine Leckage des Ventils 6 geschlossen werden kann, wird als dritter Druck bezeichnet. Beispielsweise kann der dritte Druck bei 10 % - 50 % des zweiten Drucks liegen. Um einfach zu erkennen, dass dieser Schwellwert erreicht wurde, kann die Druckanzeige wie in Figur 3 dargestellt als mechanischer Druckanzeiger ausgebildet sein, der eine kontinuierliche Skala 13 und einen Zeiger 14 aufweist, wobei der Zeiger 14 auf der Skala den jeweils aktuellen Druck in der Atmosphärenseite 9 des Druckrohres 5 anzeigt. Eine Markierung 15 kann auf der Stelle der Skala 13 angebracht sein, an welcher der dritte Druck erreicht wird. Sofern der Zeiger 14 des mechanischen Druckanzeigers die Markierung 15 überschreitet, kann auf eine Leckage des Ventils 6 oder gegebenenfalls auf das Auslösen des Ventils 6 geschlossen werden.

Figur 4 zeigt eine weitere Ausführungsform zur Anzeige des Erreichens des dritten Drucks. Hierbei gibt es keine kontinuierliche Skala, sondern eine erste Anzeigeeinheit 16 zeigt an, ob der dritte Druck erreicht wurde oder nicht. Beispielsweise kann ein Stift in einem Gehäuse 17 der Druckanzeige 10 aufgenommen sein, wenn der dritte Druck noch nicht erreicht wurde, und aus dem Gehäuse 17 herausstehen, sobald der dritte Druck erreicht wurde. Das Herausstehen des Stifts aus dem Gehäuse 17 stellt somit eine Warnung dar, dass der dritte Druck erreicht wurde. Durch die Warnung der ersten Anzeigeeinheit 16 kann auf eine Leckage des Ventils 6 oder gegebenenfalls auf das Auslösen des Ventils 6 geschlossen werden.

Derartige Lösungen zur Anzeige einer ersten Warnung bei Erreichen des dritten Drucks können rein mechanisch und daher stromlos ausgebildet werden. Nur in seltenen Fällen werden zur Anzeige der ersten Warnung Leuchtanzeigen eingesetzt, da diese eine gewissen Stromfluss benötigen, was ein Sicherheitsrisiko mit sich bringt.

Mit den erläuterten Ausführungsformen zur Anzeige des dritten Drucks, der weit unter dem zweiten Druck des Brechens der Sollbruchstelle 7 liegt, kann somit angezeigt werden, ob das Ventil 6 undicht ist. Um ein Indiz anzuzeigen, ob die Sollbruchstelle 7 gebrochen ist, kann der mechanische Druckanzeiger von Figur 3 eine zweite Markierung 18 bei einem vierten Druck bzw. die Druckanzeige 10 von Figur 4 eine zweite Anzeigeeinheit 19, beispielsweise einen zweiten aus dem Gehäuse 17 hervorspringenden Stift, zur Anzeige einer zweiten Warnung bei Erreichen eines vierten Drucks aufweisen.

Der vierte Druck entspricht dem zweiten Druck oder liegt knapp unter dem zweiten Druck, bei dem die Sollbruchstelle 7 bricht. Beispielsweise liegt der vierte Druck bei 80 % - 99 % des zweiten Drucks. Der Grund, wieso der vierte Druck unter dem zweiten Druck liegen soll ist, dass die Sollbruchstelle 7 einer gewissen Fehlertoleranz unterliegen könnte und daher der zweite Druck bei einem frühzeitigen Brechen der Sollbruchstelle 7 nie erreicht werden würde. Dies liegt wiederum daran, dass der Druck beim Öffnen des Ventils 6 in der Atmosphärenseite 9 der Druckleitung 5 rasch ansteigt, bis die Sollbruchstelle 7 bricht, und danach der Druck in der Atmosphärenseite 9 der Druckleitung 5 de facto auf den Atmosphärendruck, d.h. einen Überdruck von 0 bar, abfällt.

Zusammengefasst kann bei der Ausführungsform von Figur 3 somit auf eine Leckage des Ventils 6 ohne Bruch der Sollbruchstelle 7 geschlossen werden, wenn der Zeiger 14 zwischen der ersten Markierung 15 und der zweiten Markierung 18 liegt. Wenn der Zeiger 14 einen Druck über der zweiten Markierung 18 anzeigt, kann darauf geschlossen werden, dass die Sollbruchstelle 7 bereits gebrochen ist oder ein Brechen kurz bevorsteht. Eine Anzeige, ob das Ventil 6 ausgelöst hat, ist nicht unmittelbar möglich, denn in diesem Fall würde der Zeiger 14 einen Druck von 0 bar Überdruck anzeigen. Zur Lösung dieses Problems kann der mechanische Druckanzeiger beispielsweise einen Schleppzeiger aufweisen, der den maximal erreichten Druck anzeigt. Befindet sich der Zeiger 14 auf 0 bar Überdruck, der Schleppzeiger jedoch hinter oder auf der zweiten Markierung 18, so kann auf ein Auslösen des Ventils geschlossen werden, ohne dass hierfür das Ventil 6 selbst oder die Sollbruchstelle 7 überwacht werden müsste.

In der Ausführungsform von Figur 4 kann auf eine Leckage ohne Bruch der Sollbruchstelle 7 des Ventils 6 geschlossen werden, wenn die erste Anzeigeeinheit 16 eine Warnung ausgibt, nicht jedoch die zweite Anzeigeeinheit 19. Wenn beide Anzeigeeinheiten 16, 19 eine Warnung anzeigen, kann entweder darauf geschlossen werden, dass die Sollbruchstelle 7 bereits gebrochen ist bzw. ein Brechen kurz bevorsteht oder darauf geschlossen werden, dass das Ventil 6 ausgelöst wurde. Auch bei dieser Lösung muss das Ventil 6 selbst oder die Sollbruchstelle 7 nicht überwacht werden und alle Komponenten können rein mechanisch ausgestaltet werden, sodass auch diese Lösung stromlos funktioniert.

Bevorzugt verbleiben die Anzeigeeinheiten 16, 19 in der Warnstellung, selbst wenn der Druck wieder unter den dritten bzw. vierten Druck abfallen sollten. In dieser Ausführungsform können die Anzeigeeinheiten 16, 19 mittels des genannten Resetknopfs oder eines anderen Resetknopfs wieder in ihre ursprüngliche Stellung gebracht werden, in der sie keine Warnung anzeigen. Alternativ könnte zumindest eine der Anzeigeeinheiten 16, 19 automatisch in ihre ursprüngliche Stellung verbracht werden, sobald der Druck in der Atmosphärenseite 9 unter den dritten bzw. vierten Druck abfällt.

Bei beiden Ausführungsformen der Figuren 3 und 4 tritt an der genannten Stelle 11 kein Fluid aus, sondern nur durch die Sollbruchstelle 7.

In Figur 5 ist ein Abschnitt der Atmosphärenseite 9 der Druckleitung 5 in einer alternativen Ausführungsform dargestellt. Hierbei ist die Druckanzeige 10 durch eine Berstscheibe 20 gebildet. Die Berstscheibe 20 kann beispielsweise bei dem genannten dritten oder vierten Druck brechen. Das Brechen der Berstscheibe 20 deutet darauf hin, dass das Ventil 6 entweder leckt oder bei dem ersten Druck ausgelöst hat, ohne dass hierfür das Ventil 6 selbst oder die Sollbruchstelle 7 überwacht werden müsste. Um sicherzustellen, dass an der Stelle 11, an der die Berstscheibe 20 ersichtlich ist, nicht zu viel Kryofluid austritt, ist in der Atmosphärenseite 9 der Druckleitung 5 eine Drossel 21 vorgesehen. Da nach dem Brechen der Berstscheibe 20 jedoch in jedem Fall Kryofluid austritt, ist der Druck, bei dem die Berstscheibe 20 bricht, bevorzugt möglichst nahe am zweiten Druck gewählt, bei dem die Sollbruchstelle 7 bricht.

Erfindungsgemäß ist es auch möglich, von der Druckanzeige 10 ein elektrisches Signal wegzuführen bzw. von dieser einen Magnetschalter auslösen zu lassen, um beispielsweise ein Signal im Fahrerhaus anzuzeigen. Dadurch können kritische Zustände auch während der Fahrt angezeigt werden. Alternativ oder zusätzlich könnte das elektrische Signal oder das Auslösen des Magnetschalters auch dazu führen, dass das Starten des Motors verhindert wird, sobald der Druck in der Druckanzeige den dritten oder vierten Druck erreicht.

Überdies sei erwähnt, dass das Ventil 6 üblicherweise bei einem vorbestimmten Differenzdruck zwischen dem Druck in der druckbeaufschlagten Seite 8 und dem Druck in der Atmosphärenseite 9 auslöst. Wenn der maximal im Kryobehälter 1 erlaubte Druck beispielsweise bei 22 bar liegt und die Sollbruchstelle bei 1 bar bricht, jeweils bezüglich des Atmosphärendrucks, sollte das Ventil 6 derart eingestellt werden, dass es bei einem Differenzdruck von 21 bar auslöst. Mit dieser Einstellung kann das System bei einem Druck von 22 bar im Kryobehälter 1 Fluid aus diesem auszulassen. Diese Einstellungsmöglichkeit ist selbstverständlich auch für andere Drückbereiche möglich und nicht auf 22 bar bzw. 1 bar beschränkt.

## Patentansprüche

1. System zur Funktionskontrolle und Überdruckablassung eines Kryobehälters (1) auf einem Fahrzeugdach (3), das System umfassend ein Fahrzeug (2) und den am Fahrzeugdach (3) montierten Kryobehälter (1), welcher ein Innenvolumen (4) zur Aufnahme von Kryofluid aufweist,
wobei das System ferner eine Druckleitung (5) umfasst, welche an einem Ende mit dem Innenvolumen (4) des Kryobehälters (1) verbunden ist und vom Kryobehälter (1) am Fahrzeugdach (3) zu einer an der Fahrzeugseite (12) oder im Fahrzeuginnenraum zugänglichen Stelle (11) geführt ist, wo sich das andere Ende der Druckleitung (5) befindet, wobei ein Ventil (6) und eine Sollbruchstelle (7) in der Druckleitung (5) angeordnet sind,
**dadurch gekennzeichnet, dass**
die Druckleitung (5) an ihrem anderen Ende eine Druckanzeige (10) aufweist,
wobei das Ventil (6) zwischen der Sollbruchstelle (7) und dem Innenvolumen (4) des Kryobehälters (4) angeordnet ist und bei einem vorbestimmten ersten Druck öffnet, der größer ist als ein zweiter Druck, bei dem die Sollbruchstelle (7) bricht.

2. System nach Anspruch 1, wobei die Druckanzeige (10) einen mechanischen Druckanzeiger umfasst.

3. System nach Anspruch 1 oder 2, wobei die Druckanzeige (10) eine erste Anzeigeeinheit (16) aufweist, welche eine erste Warnung bei Erreichen eines dritten Drucks anzeigt, der geringer ist als der zweite Druck.

4. System nach Anspruch 3, wobei die Druckanzeige (10) eine zweite Anzeigeeinheit (19) aufweist, welche eine zweite Warnung bei Erreichen des vierten Drucks anzeigt, der dem zweiten Druck entspricht oder zwischen den zweiten und dem dritten Druck liegt.

5. System nach einem der Ansprüche 1 bis 4, wobei die Druckleitung (5) und die Druckanzeige (10) derart ausgebildet sind, dass nach Öffnen des Ventils (6) Kryofluid nur an der Sollbruchstelle (7) austritt.

6. System nach einem der Ansprüche 1 bis 4, wobei die Druckleitung mit einer Drossel (21) ausgestattet ist und der Druckanzeiger (10) eine Berstscheibe (20) umfasst.

7. System nach einem der Ansprüche 1 bis 6, wobei die Sollbruchstelle (7) eine Abdeckkappe ist.

8. System nach einem der Ansprüche 1 bis 7, wobei der Druckanzeiger (10) neben einer Befüllkupplung zugänglich ist.

9. System nach einem der Ansprüche 1 bis 8, wobei die Sollbruchstelle (7) am Fahrzeugdach (3) angeordnet ist.

10. System nach einem der Ansprüche 1 bis 8, wobei die Sollbruchstelle (7) seitlich am Fahrzeug (2) angeordnet ist und beim Brechen der Sollbruchstelle (7) Kryofluid in Richtung des Fahrzeugdachs (2) auslässt.

## Claims

1. A system for checking the function and releasing the excess pressure of a cryogenic container (1) on a vehicle roof (3), the system comprising a vehicle (2) and the cryogenic container (1) which is mounted on the vehicle roof (3) and has an interior volume (4) for receiving cryogenic fluid,
wherein the system furthermore comprises a pressure line (5) which is connected at one end to the interior volume (4) of the cryogenic container (1) and is led from the cryogenic container (1) on the vehicle roof (3) to a point (11) accessible on the vehicle side (12) or in the vehicle interior, at which point (11) the other end of the pressure line (5) is located, wherein a valve (6) and a predetermined breaking point (7) are arranged in the pressure line (5),
**characterized in that**
the pressure line (5) comprises a pressure gauge (10) at its other end,
wherein the valve (6) is arranged between the predetermined breaking point (7) and the interior volume (4) of the cryogenic container (4) and opens at a predetermined first pressure which is greater than a second pressure at which the predetermined breaking point (7) breaks.

2. A system according to claim 1, wherein the pressure gauge (10) comprises a mechanical pressure indicator.

3. A system according to claim 1 or 2, wherein the pressure gauge (10) has a first display unit (16) which indicates a first warning when a third pressure is reached, which is lower than the second pressure.

4. A system according to claim 3, wherein the pressure gauge (10) has a second display unit (19) which indicates a second warning when the fourth pressure is reached, which corresponds to the second pressure or lies between the second and the third pressures.

5. A system according to any of claims 1 to 4, wherein the pressure line (5) and the pressure gauge (10) are designed in such a way that, after the valve (6) has been opened, cryogenic fluid will escape only at the predetermined breaking point (7).

6. A system according to any of claims 1 to 4, wherein the pressure line is fitted with a throttle (21) and the pressure indicator (10) comprises a rupture disc (20).

7. A system according to any of claims 1 to 6, wherein the predetermined breaking point (7) is a cap.

8. A system according to any of claims 1 to 7, wherein the pressure indicator (10) is accessible next to a filling coupling.

9. A system according to any of claims 1 to 8, wherein the predetermined breaking point (7) is arranged on the vehicle roof (3).

10. A system according to any of claims 1 to 8, wherein the predetermined breaking point (7) is arranged on the side of the vehicle (2) and releases cryogenic fluid in the direction of the vehicle roof (2) when the predetermined breaking point (7) is broken.

## Revendications

1. Système de surveillance de la fonction et d'évacuation de la pression d'un récipient cryogénique (1) sur un toit de véhicule (3), ce système comportant un véhicule (2) et un récipient cryogénique (1) monté sur le toit de véhicule (3) qui présente un volume intérieur (4) pour la réception d'un fluide cryogénique,
lequel système comporte en outre une conduite sous pression (5) qui est reliée à une extrémité avec le volume intérieur (4) du récipient cryogénique (1) et qui est guidée du récipient cryogénique (1) sur le toit de véhicule (3) jusqu'à un emplacement (11) accessible sur le côté du véhicule (12) ou dans l'habitacle du véhicule où se trouve l'autre extrémité de la conduite sous pression (5), une vanne (6) et un point de rupture de la consigne (7) étant disposés sur la conduite sous pression (5)
**caractérisé en ce que**
la conduite sous pression (5) présente à son autre extrémité un indicateur de pression (10), la vanne (6) étant disposée entre le point de rupture de la consigne (7) et le volume intérieur (4) du récipient cryogénique (4) et s'ouvrant à une première pression prédéterminée qui est supérieure à une deuxième pression prédéterminée à laquelle le point de rupture de la consigne (7) casse.

2. Système selon la revendication 1, dans lequel l'indicateur de pression (10) comporte un manomètre mécanique.

3. Système selon la revendication 1 ou 2, dans lequel l'indicateur de pression (10) présente une première unité d'affichage (16) qui affiche un premier avertissement lorsqu'est atteinte une troisième pression qui est inférieure à la deuxième pression.

4. Système selon la revendication 3, dans lequel l'indicateur de pression (10) présente une deuxième unité d'affichage (19) qui affiche un deuxième avertissement lorsqu'est atteinte une quatrième pression qui correspond à la deuxième pression ou se trouve entre la deuxième et la troisième pression.

5. Système selon une des revendications 1 à 4, dans lequel la conduite sous pression (5) et l'indicateur de pression (10) sont configurés de telle sorte qu'après l'ouverture de la vanne (6), le fluide cryogénique sort uniquement au niveau du point de rupture de la consigne (7).

6. Système selon une des revendications 1 à 4, dans lequel la conduite sous pression (5) est équipée d'un étrangleur (21) et l'indicateur de pression (10) comporte un disque de rupture (20).

7. Système selon une des revendications 1 à 6, dans lequel le point de rupture de la consigne (7) est un couvercle.

8. Système selon une des revendications 1 à 7, dans lequel l'indicateur de pression (10) est accessible à côté d'un raccordement de remplissage.

9. Système selon une des revendications 1 à 8, dans lequel le point de rupture de la consigne (7) est disposé sur le toit de véhicule (3).

10. Système selon une des revendications 1 à 8, dans lequel le point de rupture de la consigne (7) est disposé sur le côté du véhicule (2) et, lors de la rupture du point de rupture de la consigne (7), laisse sortir du fluide cryogénique en direction du toit de véhicule (2).
